# FASCICULE DE BREVET EUROPEEN

(11) **EP 2 398 662 B1**
(45) Date de publication et mention de la délivrance du brevet: **19.12.2012**
(21) Numéro de dépôt: 10709885.7
(22) Date de dépôt: 18.02.2010
(51) Int. Cl.: B60K 1/04, E05C 3/04, E05B 17/00, E05C 3/00

(54) **VERROU DE FIXATION D'UN CONTENEUR D'ALIMENTATION A UN VEHICULE, PROCEDE DE FIXATION DU CONTENEUR D'ALIMENTATION ET VEHICULE AINSI EQUIPE**
SCHLOSS ZUR SICHERUNG EINES VERSORGUNGSBEHÄLTERS AN EINEM FAHRZEUG, VERFAHREN ZUR SICHERUNG DES VERSORGUNGSBEHÄLTERS SOWIE MIT DIESEM AUSGESTATTETES FAHRZEUG
LOCK FOR SECURING A SUPPLY CONTAINER TO A VEHICLE, METHOD FOR SECURING A SUPPLY CONTAINER AND VEHICLE THUS EQUIPPED

(30) Priorité: 18.02.2009 FR 0951052
(43) Date de publication de la demande: 28.12.2011
(73) Titulaire: Renault S.A.S., 92100 Boulogne-Billancourt (FR)
(72) Inventeur: TREDAN, Eric, F-92220 Bagneux (FR)
(86) Numéro de dépôt international: PCT/FR2010/050276
(87) Numéro de publication internationale: WO 2010/094892

(56) Documents cités:
- WO-A2-2006/066782
- DE-U1-202008 012 144
- US-B1- 6 676 176

## Description

La présente invention concerne un verrou de fixation d'un conteneur d'alimentation, plus particulièrement un conteneur d'énergie du type batterie, notamment à un véhicule, un procédé de fixation du conteneur d'alimentation et le véhicule ainsi équipé.

Dans certains types de véhicules, notamment les véhicules tout électriques, le conteneur d'alimentation, comme une batterie électrique d'alimentation d'un moteur d'entraînement, est volumineux et lourd à manipuler. Ces conteneurs peuvent être situés sous le plancher du véhicule et doivent par conséquent être soulevés à partir du sol pour les fixer à une partie de la caisse du véhicule.

Par ailleurs ces conteneurs doivent être remplacés périodiquement et nécessitent par conséquent un dispositif de fixation rapide, commode à mettre en oeuvre par les utilisateurs. Un tel dispositif est par exemple un verrou, constitué de deux parties, une partie réceptacle et une partie de verrouillage qui s'assemblent l'une à l'autre

De DE 20 2008012144U1 on connaît un verrou de ce type qui comprend deux parties, une partie réceptacle solidaire du conteneur et une partie de verrou montée sur la partie réceptacle, notamment avec un axe de verrouillage rotatif engageant la caisse du véhicule. Néanmoins, la fixation requiert que l'axe de verrouillage soit soulevé avant sa rotation sur la partie réceptacle. Cet effort est difficile à réaliser sur l'axe de verrouillage.

L'invention vise à remédier à cet inconvénient et propose un verrou de fixation d'un conteneur d'alimentation à un véhicule, qui puisse se monter en une seule pièce sur la caisse du véhicule, qui simplifie ce montage, et qui améliore la répartition de l'effort lors du montage en fixation du conteneur, notamment au placage de celui-ci sur la partie support de caisse avant son verrouillage à celle-ci.

Il est proposé selon l'invention un verrou de fixation d'un conteneur d'alimentation à la caisse d'un véhicule, caractérisé en ce qu'il comporte une partie de corps réceptacle d'un élément de verrou, apte à être fixée à la caisse du véhicule, ledit élément de verrou étant monté rotatif dans ladite partie de corps et étant pourvu au moins d'une patte inférieure formée en saillie par rapport à la partie inférieure de la partie de corps, ladite patte inférieure étant apte à coopérer avec un élément presseur monté sur la partie de corps pour venir en prise avec une partie saillante du conteneur d'alimentation, en vue de sa fixation à la caisse du véhicule.

Ladite partie de corps a avantageusement une forme de fût cylindrique surmontée d'une plaque de fixation à la caisse du véhicule. L'élément de verrou est monté à faible jeu dans la partie de corps, étant retenu à sa partie supérieure par une collerette engagée dans un épaulement complémentaire supérieur de ladite partie de corps et à sa partie inférieure par ladite au moins une patte inférieure, laquelle est appliquée sur le bord inférieur de la partie de corps.

Ledit élément presseur peut être une bague cylindrique reçue à faible jeu extérieurement sur la partie de corps, montée à liberté de translation sur celle-ci et rappelée vers la partie inférieure de la partie de corps du verrou par un moyen de pression adapté, par exemple par un ressort ou une rondelle Belleville ou autre.

Cette bague ou l'élément presseur est avantageusement pourvu d'au moins une partie élargie latérale apte à recevoir en engagement serré ladite partie saillante de prise du conteneur d'alimentation, en coopération avec ladite patte inférieure convenablement tournée sous ladite partie élargie.

Ladite partie saillante de prise du conteneur d'alimentation peut être une partie plate s'étendant en saillie du conteneur d'alimentation ou de son cadre support et adaptée pour engager ladite partie élargie de l'élément presseur et ladite au moins une patte inférieure convenablement tournée de l'élément de verrou.

De préférence, ladite au moins une partie élargie de l'élément presseur et ladite au moins une patte inférieure de l'élément de verrou ont une conformation plane de contour sensiblement analogue l'une à l'autre, de préférence rectangulaire.

L'élément presseur peut comporter deux parties élargies opposées l'une à l'autre et l'élément de verrou peut comporter deux pattes inférieures opposées l'une à l'autre, et le conteneur d'alimentation peut comporter une partie saillante de prise convenablement découpée pour venir de part et d'autre de l'élément de verrou et engager les deux parties élargies opposées de l'élément presseur et les deux pattes inférieures opposées de l'élément de verrou.

Eventuellement, la au moins une partie élargie de l'élément presseur ou ladite au moins une patte inférieure de l'élément de verrou peut comporter un dispositif adapté pour assurer et verrouiller le bon positionnement de la partie saillante de prise du conteneur relativement à l'élément presseur ou à ladite patte. Ce dispositif peut être de type plot et trou complémentaire sur les parties précitées, respectivement, ou un dispositif d'engagement mécanique analogue.

L'invention concerne également un procédé de montage en fixation d'un conteneur d'alimentation au moyen d'un verrou de fixation tel que défini précédemment sur la caisse d'un véhicule, caractérisé en ce qu'il comprend les étapes suivantes :
- monter le conteneur d'alimentation en position sur la caisse du véhicule, à l'aide d'un moyen d'assistance approprié, le moyen d'assistance soulevant le conteneur d'alimentation et l'élément presseur par ladite partie saillante de prise en application sur la partie élargie de celui-ci, légèrement au-dessus du plan de rotation de ladite au moins une patte inférieure de l'élément de verrou,
- tourner ladite au moins une patte inférieure de l'élément de verrou pour l'amener sous ladite partie saillante de prise du conteneur d'alimentation et sous la partie élargie de l'élément presseur, et
- abaisser le conteneur d'alimentation à l'aide dudit moyen d'assistance de manière que la partie saillante de prise du conteneur d'alimentation repose sur ladite au moins une patte inférieure de l'élément de verrou, laquelle est engagée à celle-ci par serrage sous la pression de la partie élargie de l'élément presseur.

Naturellement, l'élévation de la partie saillante de prise du conteneur au dessus du plan de rotation de ladite au moins une patte inférieure par le moyen d'assistance est réalisée à un niveau suffisant pour surseoir aux défauts de tôlerie de la caisse du véhicule.

De préférence, cette élévation de la partie saillante de prise par le moyen d'assistance vient en arrêt à un niveau de hauteur indexé au contact inférieur d'une partie du moyen d'assistance à ladite au moins une patte inférieure de l'élément de verrou.

Le démontage de la fixation du conteneur d'alimentation est réalisé de manière inverse au montage.

L'invention concerne également un véhicule comportant un verrou de fixation de conteneur d'alimentation tel que défini précédemment.

L'invention est illustrée ci-après à l'aide d'exemples de réalisation de l'invention, non limitatifs et en référence aux dessins annexés, sur lesquels :
- la figure 1 est une vue en coupe médiane d'un verrou de fixation de batterie selon l'invention, en position hors service,
- la figure 2 est une vue de dessus de ce verrou,
- la figure 3 est une vue du verrou en cours de montage de fixation de la batterie,
- la figure 4 est une vue en coupe de la batterie verrouillée à la caisse d'un véhicule,
- la figure 5 est une vue de dessus du verrou et de la batterie verrouillée en position,
- la figure 6 montre un dispositif assurant le bon positionnement de l'élément de verrou relativement à la partie saillante de prise de la batterie,
- la figure 7 montre une vue en coupe d'un verrou selon une variante de réalisation de l'invention, la batterie étant verrouillée, et
- la figure 8 est une vue de dessus du verrou et de la batterie verrouillée à la caisse du véhicule selon la figure 7.

L'invention s'applique à tout véhicule comprenant un conteneur d'alimentation en énergie positionné, par exemple dans le coffre ou sous le châssis du véhicule. Dans la description qui va suivre, on décrit le montage en fixation d'un conteneur d'énergie au travers de la description du montage en fixation d'une batterie d'alimentation électrique d'un moteur d'entraînement d'un véhicule. L'invention s'applique toutefois à tout type de conteneur d'alimentation, ainsi qu'au démontage d'un tel conteneur d'alimentation par les opérations inverses.

Avec référence aux dessins, on a représenté un verrou 1 de fixation de batterie 3 de véhicule. Ce verrou 1 est fixé à une partie support de caisse 5 du véhicule. Il est destiné à recevoir en verrouillage la batterie 3 par une partie saillante de prise 7 de celle-ci, ou de son cadre support.

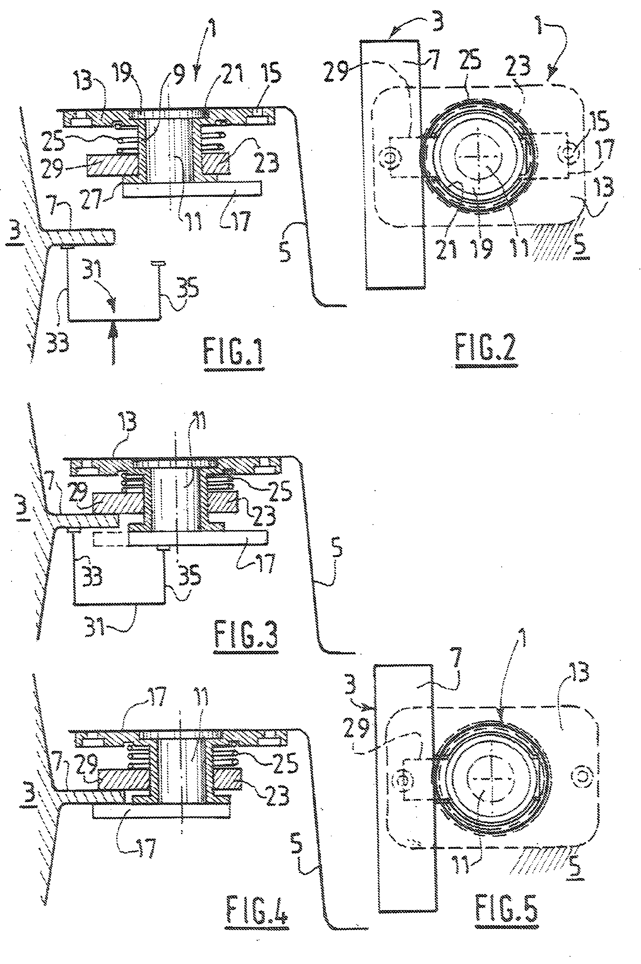

Aux figures 1 et 2, le verrou 1 est représenté en position hors service. Un tel verrou 1 comporte essentiellement une partie de corps cylindrique 9 à forme de fût et un élément de verrou 11 monté rotatif dans la partie de corps 9.

La partie de corps 9 comporte une plaque supérieure 13 adaptée pour la fixation à ladite partie support de caisse 5, par exemple au moyen de vis de fixation 15.

L'élément de verrou 11 est pourvu d'une patte inférieure 17 s'étendant en saillie latéralement de la partie de corps 9. Cette patte 17 est plane et découpée à forme de rectangle. Elle est perpendiculaire à l'axe de rotation du verrou. L'élément de verrou 11 est retenu au niveau supérieur sur la partie de corps 9 par une collerette supérieure 19 montée à faible jeu dans un épaulement complémentaire 21 de la partie de corps 9. Il est retenu au niveau inférieur par la patte 17 appliquée sur son bord inférieur.

Le verrou 1 comporte en outre une bague 23 (élément presseur) montée en translation sur la partie de corps 9 à faible jeu de sa paroi et à l'extérieur de celle ci, entre un élément de pression supérieur 25 et une collerette inférieure 27 de la partie de corps 9. L'élément de pression 25 est, par exemple, un ressort hélicoïdal reçu sur la partie de corps 9 extérieurement à celle-ci et appliqué contre la bague 23 et contre la paroi inférieure de la plaque de fixation 13. Cet élément de pression 25 rappelle fermement la bague 23 vers le bas, contre la collerette inférieure 27.

La bague 23 est pourvue d'une partie élargie 29 formant saillie radialement au fût 9 et de contour identique à celui de la patte inférieure 17. Cette partie élargie 29 est tournée vers la partie saillante de prise 7, celle-ci étant diamétralement opposée à la patte inférieure 17.

Le montage en fixation de la batterie 3 sur la caisse 5 du véhicule est à présent décrit.

Il est réalisé à l'aide d'un dispositif d'assistance 31, par exemple installé en usine, lequel dispositif est adapté pour lever la batterie 3. Ce dispositif comporte un bras de levée 33 adapté pour s'appliquer sous la partie saillante de prise 7 de la batterie et la lever, et un élément palpeur 35 adapté pour s'appliquer sous la patte inférieure 17 et formant fin de course de levée au contact de celle-ci. Dans un premier temps, le bras 33 lève la partie saillante de prise 7 de la batterie verticalement (figure 3) légèrement au-dessus de la patte inférieure 17. Une tolérance de levée est nécessaire pour s'adapter aux défauts de tôlerie de la caisse.

La patte inférieure 17 est alors tournée de 180° (un demi-tour) pour venir sous la partie saillante de prise 7 de la batterie (en trait interrompu). Un quart de tour peut suffire à condition que la patte inférieure 17 vienne en prise avec la batterie (figure 4).

Le bras de levée 33 est alors descendu, de même que la bague 23 avec sa partie elargie 29, laquelle vient en pression de serrage contre la partie saillante de prise 7 de la batterie. La partie de prise 7 de la batterie serrée entre la partie élargie 29 de la bague et la patte inférieure 17 est alors verrouillée (figures 4 et 5).

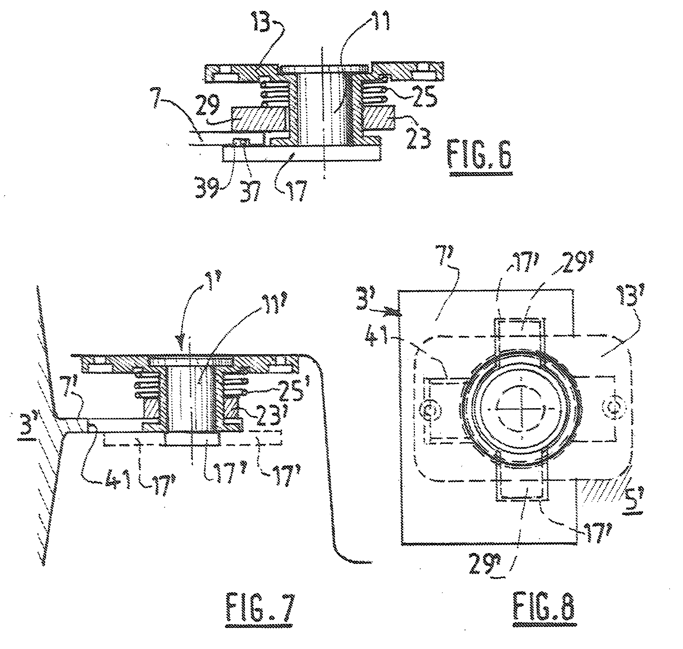

Le verrouillage peut être complété par un élément d'accrochage de la patte 17 coopérant avec la partie saillante de prise 7 de la batterie, par exemple un plot 37 en saillie de la patte 17 reçu dans un trou complémentaire 39 de la partie saillante de prise 7 (figure 6).

On notera à titre de variante que la bague 23' (figures 7 et 8) peut comporter deux parties élargies 29' diamétralement opposées l'une à l'autre et la partie saillante de prise 7' de la batterie est découpée sur un chemin ouvert 41 pour recevoir le verrou 1 par des parties saillantes de prise 7' disposées de part et d'autre du verrou et par exemple opposées. De même, l'élément de verrou 11' comporte deux pattes 17' formées en saillie radialement et diamétralement opposées, en trait interrompu sur la figure 7. Ces pattes 17' sont tournées à angle droit des parties élargies 29'. Au moment du montage en fixation de la batterie 3', la partie de prise 7' est levée par le dispositif d'assistance (non représenté), à l'encontre de l'élément presseur 23', à un jeu suffisant pour tourner les pattes 17', selon un quart de tour, en trait plein sur la figure 7, sous les parties élargies 29' de l'élément presseur.

Le dispositif d'assistance est ensuite descendu, comme précédemment, et la batterie 3' est alors fixée à la caisse 5' de véhicule, la partie de prise 7' de la batterie 3' étant serrée entre les parties élargies 29' et les pattes inférieures 17'.

Le démontage de la fixation de la batterie 3, 3' est réalisé de manière inverse au montage comme décrit ci-dessus.

## Revendications

1. Verrou (1, 1') de fixation d'un conteneur d'alimentation (3, 3') à la caisse (5, 5') d'un véhicule, qui comporte une partie de corps (9) réceptacle d'un élément de verrou (11, 11'), apte à être fixée à la caisse (5, 5') du véhicule, ledit élément de verrou (11, 11') étant monté rotatif dans ladite partie de corps (9) et étant pourvu au moins d'une patte inférieure (17, 17') formée en saillie par rapport à la partie inférieure de la partie de corps (9), ladite patte inférieure (17, 17') étant apte à coopérer avec un élément presseur (23, 23') monté sur la partie de corps (9) pour venir en prise avec une partie saillante (7, 7') du conteneur d'alimentation, en vue de sa fixation à la caisse (5, 5') du véhicule.

2. Verrou (1, 1') selon la revendication 1, **caractérisé en ce que** ladite partie de corps (9) a une forme de fût cylindrique surmontée d'une plaque de fixation (13, 13') à la caisse (5, 5') du véhicule.

3. Verrou (1, 1') selon la revendication 2, **caractérisé en ce que** l'élément de verrou (11, 11') est monté à faible jeu dans la partie de corps (9), étant retenu à sa partie supérieure par une collerette (19) engagée dans un épaulement complémentaire supérieur (21) de ladite partie de corps (9) et à sa partie inférieure par ladite au moins une patte inférieure (17, 17'), laquelle est appliquée sur le bord inférieur de la partie de corps (9).

4. Verrou (1, 1') selon l'une quelconque des revendications précédentes, **caractérisé en ce que** ledit élément presseur (23, 23') est une bague cylindrique reçue à faible jeu extérieurement sur la partie de corps (9), montée à liberté de translation sur celle-ci et rappelée vers la partie inférieure de la partie de corps (9) du verrou (1, 1') par un moyen de pression (25) adapté.

5. Verrou (1, 1') selon l'une quelconque des revendications précédentes, **caractérisé en ce que** l'élément presseur (23, 23') est pourvu d'au moins une partie élargie latérale (29, 29') apte à recevoir en engagement serré ladite partie saillante de prise (7, 7') du conteneur, en coopération avec ladite patte inférieure (17, 17') convenablement tournée sous ladite partie élargie (29, 29').

6. Verrou (1, 1') selon l'une quelconque des revendications précédentes, **caractérisé en ce que** ladite au moins une partie élargie (29, 29') de l'élément presseur (23, 23') et ladite au moins une patte inférieure (17, 17') de l'élément de verrou (11, 11') ont une conformation plane de contour sensiblement analogue l'une à l'autre.

7. Procédé de montage en fixation d'un conteneur d'alimentation (3, 3') au moyen d'un verrou (1, 1') de fixation sur la caisse (5, 5') d'un véhicule selon l'une quelconque des revendications précédentes, **caractérisé en ce qu'**il comprend les étapes suivantes :
- monter le conteneur d'alimentation (3, 3') en position sur la caisse (5, 5') du véhicule, à l'aide d'un moyen d'assistance approprié (31), le moyen d'assistance (31) soulevant le conteneur d'alimentation (3, 3') et l'élément presseur (23, 23') par ladite partie saillante de prise (7, 7') en application sur la partie élargie (29, 29') de celui-ci, légèrement au-dessus du plan de rotation de ladite au moins une patte inférieure (17, 17') de l'élément de verrou (11, 11'),
- tourner ladite au moins une patte inférieure (17, 17') de l'élément de verrou (11, 11') pour l'amener sous ladite partie saillante de prise (7, 7') du conteneur d'alimentation et sous la partie élargie (29, 29') de l'élément presseur (23, 23'), et
- abaisser le conteneur d'alimentation (3, 3') à l'aide dudit moyen d'assistance (31) de manière que la partie saillante de prise (7, 7') du conteneur d'alimentation repose sur ladite au moins une patte inférieure (17, 17') de l'élément de verrou (11, 11'), laquelle est engagée à celle-ci par serrage sous la pression de la partie élargie (29, 29') de l'élément presseur (23, 23').

8. Véhicule **caractérisé en ce qu'**il comporte un verrou (1, 1') de fixation de conteneur d'alimentation selon l'une quelconque des revendications 1 à 6.

## Claims

1. Lock (1, 1') for attaching a supply container (3, 3') to the body shell (5, 5') of a vehicle, which comprises a body portion (9) that is a receptacle of a lock element (11, 11'), capable of being attached to the body shell (5, 5') of the vehicle, said lock element (11, 11') being rotatably mounted in said body portion (9) and being provided with at least one lower lug (17, 17') formed to protrude from the lower portion of the body portion (9), said lower lug (17, 17') being capable of interacting with a presser element (23, 23') mounted on the body portion (9) in order to engage with a protruding portion (7, 7') of the supply container, in order to attach it to the body shell (5, 5') of the vehicle.

2. Lock (1, 1') according to Claim 1, **characterized in that** said body portion (9) has the shape of a cylindrical barrel surmounted by an attachment plate (13, 13') for attachment to the body shell (5, 5') of the vehicle.

3. Lock (1, 1') according to Claim 2, **characterized in that** the lock element (11, 11') is mounted with slight clearance in the body portion (9), being retained at its upper portion by a collar (19) engaged in an upper matching shoulder (21) of said body portion (9) and at its lower portion by said at least one lower lug (17, 17'), which is pressed onto the lower edge of the body portion (9).

4. Lock (1, 1') according to any one of the preceding claims, **characterized in that** said presser element (23, 23') is a cylindrical ring received with slight clearance externally on the body portion (9), mounted so as to translate freely on the latter and returned to the lower portion of the body portion (9) of the lock (1, 1') by an appropriate pressure means (25).

5. Lock (1, 1') according to any one of the preceding claims, **characterized in that** the presser element (23, 23') is provided with at least one lateral widened portion (29, 29') capable of receiving in tight engagement said engagement protruding portion (7, 7') of the container, in cooperation with said lower lug (17, 17') appropriately turned under said widened portion (29, 29').

6. Lock (1, 1') according to any one of the preceding claims, **characterized in that** said at least one widened portion (29, 29') of the presser element (23, 23') and said at least one lower lug (17, 17') of the lock element (11, 11') have a flat conformation with a contour substantially similar to one another.

7. Method of fixedly installing a supply container (3, 3') by means of a lock (1, 1') for attachment to the body shell (5, 5') of a vehicle according to any one of the preceding claims, **characterized in that** it comprises the following steps:
- installing the supply container (3, 3') in position on the body shell (5, 5') of the vehicle, with the aid of an appropriate means of assistance (31), the means of assistance (31) raising the supply container (3, 3') and the presser element (23, 23') by said engagement protruding portion (7, 7') in application on the widened portion (29, 29') of the latter slightly beneath the plane of rotation of said at least one lower lug (17, 17') of the lock element (11, 11'),
- turning said at least one lower lug (17, 17') of the lock element (11, 11') in order to bring it beneath said engagement protruding portion (7, 7') of the supply container and beneath the widened portion (29, 29') of the presser element (23, 23'), and
- lowering the supply container (3, 3') with the aid of said means of assistance (31) so that the engagement protruding portion (7, 7') of the supply container rests on said at least one lower lug (17, 17') of the lock element (11, 11'), which is engaged with the latter by clamping under the pressure of the widened portion (29, 29') of the presser element (23, 23').

8. Vehicle, **characterized in that** it comprises a lock (1, 1') for attaching a supply container according to any one of Claims 1 to 8.

## Patentansprüche

1. Riegel (1, 1') zur Befestigung eines Versorgungsbehälters (3, 3') am Aufbau (5, 5') eines Fahrzeugs, der einen ein Riegelelement (11, 11') aufnehmenden Körperbereich (9) aufweist, der am Aufbau (5, 5') des Fahrzeugs befestigt werden kann, wobei das Riegelelement (11, 11') im Körperbereich (9) drehbar angeordnet und mit mindestens einer unteren Lasche (17, 17') versehen ist, die bezüglich des unteren Bereichs des Körperbereichs (9) vorstehend geformt ist, wobei die untere Lasche (17, 17') mit einem auf den Körperbereich (9) montierten Andrückelement (23, 23') zusammenwirken kann, um mit einem vorstehenden Bereich (7, 7') des Versorgungsbehälters für seine Befestigung am Aufbau (5, 5') des Fahrzeugs in Eingriff zu kommen.

2. Riegel (1, 1') nach Anspruch 1, **dadurch gekennzeichnet, dass** der Körperbereich (9) eine Form eines zylindrischen Schafts hat, über dem sich eine Platte (13, 13') zur Befestigung am Aufbau (5, 5') des Fahrzeugs befindet.

3. Riegel (1, 1') nach Anspruch 2, **dadurch gekennzeichnet, dass** das Riegelelement (11, 11') mit geringem Spiel in den Körperbereich (9) montiert ist, wobei es in seinem oberen Bereich von einem Kragen (19), der in eine obere komplementäre Schulter (21) des Körperbereichs (9) eingeführt ist, und in seinem unteren Bereich durch die mindestens eine untere Lasche (17, 17') gehalten wird, die auf den unteren Rand des Körperbereichs (9) aufgebracht ist.

4. Riegel (1, 1') nach einem der vorhergehenden Ansprüche, **dadurch gekennzeichnet, dass** das Andrückelement (23, 23') ein zylindrischer Ring ist, der mit geringem Spiel außen auf dem Körperbereich (9) aufgenommen wird, translationsfrei auf diesen montiert ist und zum unteren Bereich des Körperbereichs (9) des Riegels (1, 1') durch eine geeignete Andrückeinrichtung (25) zurückgestellt wird.

5. Riegel (1, 1') nach einem der vorhergehenden Ansprüche, **dadurch gekennzeichnet, dass** das Andrückelement (23, 23') mit mindestens einem seitlichen verbreiterten Bereich (29, 29') versehen ist, der den vorstehenden Eingriffsbereich (7, 7') des Behälters in Zusammenwirkung mit der unteren Lasche (17, 17') mit Presspassung aufnehmen kann, die in geeigneter Weise unter den verbreiterten Bereich (29, 29') gedreht ist.

6. Riegel (1, 1') nach einem der vorhergehenden Ansprüche, **dadurch gekennzeichnet, dass** der mindestens eine verbreiterte Bereich (29, 29') des Andrückelements (23, 23') und die mindestens eine untere Lasche (17, 17') des Riegelelements (11, 11') eine ebene Gestaltung mit einem zueinander im Wesentlichen analogen Umriss haben.

7. Verfahren zur Befestigungsmontage eines Versorgungsbehälters (3, 3') mittels eines Riegels (1, 1') zur Befestigung am Aufbau (5, 5') eines Fahrzeugs nach einem der vorhergehenden Ansprüche, **dadurch gekennzeichnet, dass** es die folgenden Schritte enthält:
- Montieren des Versorgungsbehälters (3, 3') in Stellung auf den Aufbau (5, 5') des Fahrzeugs mit Hilfe einer geeigneten Hilfseinrichtung (31), wobei die Hilfseinrichtung (31) den Versorgungsbehälter (3, 3') und das Andrückelement (23, 23') durch den vorstehenden Eingriffsbereich (7, 7') in Anlage auf dessen verbreitertem Bereich (29, 29') leicht über die Drehebene der mindestens einen unteren Lasche (17, 17') des Riegelelements (11, 11') anhebt,
- Drehen der mindestens einen unteren Lasche (17, 17') des Riegelelements (11, 11'), um sie unter den vorstehenden Eingriffsbereich (7, 7') des Versorgungsbehälters und unter den verbreiterten Bereich (29, 29') des Andrückelements (23, 23') zu bringen, und
- Absenken des Versorgungsbehälters (3, 3') mit Hilfe der Hilfseinrichtung (31), so dass der vorstehende Eingriffsbereich (7, 7') des Versorgungsbehälters auf der mindestens einen unteren Lasche (17, 17') des Riegelelements (11, 11') ruht, der mit dieser durch Einspannen unter dem Druck des verbreiterten Bereichs (29, 29') des Andrückelements (23, 23') verbunden ist.

8. Fahrzeug, **dadurch gekennzeichnet, dass** es einen Riegel (1, 1') zur Befestigung eines Versorgungsbehälters nach einem der Ansprüche 1 bis 6 aufweist.
